# EUROPÄISCHE PATENTSCHRIFT

(11) **EP 3 526 089 B1**
(45) Veröffentlichungstag und Bekanntmachung des Hinweises auf die Patenterteilung: **16.12.2020**
(21) Anmeldenummer: 17781102.3
(22) Anmeldetag: 09.10.2017
(51) Int. Cl.: B60T 13/16

(54) **VERFAHREN ZUM BETRIEB EINER ELEKTROHYDRAULISCHEN BREMSANLAGE UND BREMSANLAGE**
ELECTRO-HYDRAULIC BRAKE SYSTEM AND METHOD FOR CONTROLLING IT
SYSTEME DE FRINAGE ÉLECTRORAUIQUE ET METHODE DE CONTROLE

(30) Priorität: 11.10.2016 DE 102016219699; 13.09.2017 DE 102017216118
(43) Veröffentlichungstag der Anmeldung: 21.08.2019
(73) Patentinhaber: Continental Teves AG & Co. OHG, 60488 Frankfurt am Main (DE)
(72) Erfinder: PEICHL, Thomas, 61206 Wöllstadt (DE); SCHMIDT, Holger, 35435 Wettenberg (DE); ULLRICH, Thorsten, 64579 Gernsheim (DE)
(86) Internationale Anmeldenummer: PCT/EP2017/075632
(87) Internationale Veröffentlichungsnummer: WO 2018/069223

(56) Entgegenhaltungen:
- EP-A1- 2 641 798
- DE-A1-102012 202 645
- DE-A1-102012 205 860
- DE-A1-102012 205 962
- DE-A1-102012 210 809
- DE-A1-102014 225 958

## Beschreibung

Die Erfindung betrifft ein Verfahren zum Betrieb einer elektrohydraulischen Bremsanlage gemäß dem Oberbegriff von Anspruch 1 sowie eine Bremsanlage, in welcher ein derartiges Verfahren durchgeführt wird.

In der Kraftfahrzeugtechnik finden "Brake-by-Wire"-Bremsanlagen eine immer größere Verbreitung. Derartige Bremsanlagen umfassen neben einem durch den Fahrzeugführer betätigbaren Hauptbremszylinder eine elektrisch ansteuerbare Druckbereitstellungseinrichtung, mittels welcher in einer Betriebsart "Brake-by-Wire", in welcher der Fahrzeugführer von dem direkten Zugriff auf die Radbremsen entkoppelt ist, eine Betätigung der Radbremsen stattfindet. Ein zum Stand der Technik gehörendes Beispiel dieser Systeme ist in DE 10 2014 225 958 offenbart.

Bremsanlagen, die in automatisiert fahrenden Fahrzeugen zum Einsatz kommen sollen, müssen für einen während des automatisierten Fahrens (Autopilot) auftretenden Fehler in der Bremsanlage eine elektrisch steuerbare Rückfallebene bereitstellen, die eine sichere Abbremsung des Fahrzeuges gewährleistet, bis der menschliche Fahrzeugführer die Fahraufgabe wieder übernommen hat.

Aus der DE 10 2014 225 954 A1 ist hierzu bekannt, eine Bremsanlage bereitzustellen mit einem Primärbremssystem, welches einen mittels eines Bremspedals betätigbaren Hauptbremszylinder, eine zu- und abschaltbare Simulationseinrichtung zur bedarfsweisen Erzeugung eines Bremspedalgefühls, eine erste elektrisch steuerbare Druckbereitstellungseinrichtung zur Betätigung der vier Radbremsen und eine elektrisch steuerbare Druckmodulationseinrichtung zum Einstellen radindividueller Bremsdrücke für die vier Radbremsen umfasst, und mit einem Sekundärbremssystem für die zwei Vorderradbremsen, welches hydraulisch in Reihe zwischen das Primärbremssystem und die zwei Vorderradbremsen geschaltet ist. Das Sekundärbremssystem umfasst eine zweite elektrisch steuerbare Druckbereitstellungseinrichtung zur Betätigung der Vorderradbremsen und je Vorderradbremse zumindest ein elektrisch betätigbares Abtrennventil, welches in der hydraulischen Verbindung zwischen dem ersten Bremssystem und der entsprechenden Vorderradbremse angeordnet ist. Das Sekundärbremssystem stellt im Falle eines Ausfalls des Primärbremssystems die elektrisch ansteuerbare Rückfallebene für die Abbremsung des Fahrzeuges im automatisierten Betrieb dar. Dabei wird in der DE 10 2014 225 954 A1 beschrieben, dass in der Normalbetriebsart der Bremsanlage die vier Radbremsen mittels der ersten Druckbereitstellungseinrichtung des Primärbremssystems mit Bremsdruck versorgt werden. Im Falle eines Ausfalls der ersten Druckbereitstellungseinrichtung oder des Primärbremssystems werden nur die zwei Vorderradbremsen mittels der zweiten Druckbereitstellungseinrichtung des Sekundärbremssystems mit Bremsdruck versorgt. Dies stellt die elektrisch steuerbare Rückfallebene für die Abbremsung des Fahrzeugs im automatisierten Betrieb. Die DE 10 2014 225 954 A1 beschreibt ein Betriebskonzept für die Bremsanlage, bei welchem entweder das Primärbremssystem oder das Sekundärbremssystem jeweils exklusiv (ausschließlich) die Bremsanforderung eines virtuellen Fahrers (Autopiloten) umsetzt. "Exklusiv" bedeutet hierbei, dass während das eine Bremssystem die Druckbereitstellung übernimmt, das andere Bremssystem passiv oder "stromlos" ist, d.h. weder die Druckbereitstellungseinrichtung noch eines der Ventile des anderen Bremssystems wird betätigt. Ein derartiges Betriebskonzept weist allerdings eine Reihe von Nachteilen auf. So kann z.B. eine überlagerte Bremsbetätigung des menschlichen Fahrers während der Druckstellung durch das Sekundärbremssystem, d.h. eine Fahrerübernahme, nicht durch das System kontrolliert erfolgen. Auch ist bei der Druckstellung durch das Sekundärbremssystem nur auf zwei der vier Radbremsen die mögliche Abbremsung auf ca. 60% begrenzt.

Der Erfindung liegt daher die Aufgabe zugrunde, ein verbessertes Verfahren zum Betrieb einer Bremsanlage mit einem ersten Bremssystem und einem zweiten Bremssystem, welches hydraulisch in Reihe zwischen das erste Bremssystem und zwei der zumindest vier Radbremsen geschaltet ist, sowie eine entsprechende Bremsanlage bereitzustellen. Insbesondere sollen die beschriebenen Nachteile vermieden werden.

Diese Aufgabe wird erfindungsgemäß durch ein Verfahren gemäß Anspruch 1 gelöst und eine Bremsanlage gemäß Anspruch 15 gelöst.

Der Erfindung liegt der Gedanke zugrunde, in einer elektrohydraulischen Bremsanlage mit zumindest einer ersten, einer zweiten, einer dritten und einer vierten hydraulisch betätigbaren Radbremse, einem ersten Bremssystem umfassend einen mittels eines Bremspedals betätigbaren Hauptbremszylinder, welcher über zumindest ein elektrisch betätigbares Trennventil mit den vier Radbremsen hydraulisch verbunden ist, und eine erste elektrisch steuerbare Druckbereitstellungseinrichtung, welche mit den vier Radbremsen hydraulisch verbunden ist, und einem zweiten Bremssystem umfassend eine zweite elektrisch steuerbare Druckbereitstellungseinrichtung, welche mit der ersten und der dritten Radbremse hydraulisch verbunden ist, und je ein Abtrennventil für die erste und die dritte Radbremse, wobei das Abtrennventil jeweils in einer hydraulischen Verbindung zwischen dem ersten Bremssystem und der entsprechenden Radbremse angeordnet ist, in vorgegebenen Zuständen der Bremsanlage einen Bremsdruckaufbau in der zweiten und der vierten Radbremse durchzuführen, indem bei geöffneten Abtrennventilen die zweite Druckbereitstellungseinrichtung angesteuert wird.

Zunächst ist die erste elektrisch steuerbare Druckbereitstellungseinrichtung mit den vier Radbremsen hydraulisch verbunden, um in jeder der vier Radbremsen einen Bremsdruck aufbauen zu können, und die zweite elektrisch steuerbare Druckbereitstellungseinrichtung ist mit der ersten und der dritten Radbremse hydraulisch verbunden, um in der ersten und der dritten Radbremsen einen Bremsdruck aufbauen zu können.

Die Erfindung bietet den Vorteil, dass bei einer Ansteuerung der zweiten Druckbereitstellungseinrichtung neben einem Bremsdruckaufbau in der ersten und dritten Radbremse, welche zu diesem Zweck mit der zweiten Druckbereitstellungseinrichtung hydraulisch verbunden sind, auch ein Bremsdruckaufbau in der zweiten und vierten Radbremse stattfindet, da Druckmittel von der zweiten Druckbereitstellungseinrichtung über die geöffneten Abtrennventile zu dem ersten Bremssystem gelangt, welches seinerseits mit der zweiten und vierten Radbremse verbunden ist. In den vorgegebenen Zuständen der Bremsanlage wird also ein Bremsdruckaufbau an allen vier Radbremsen mittels der zweiten Druckbereitstellungseinrichtung des zweiten Bremssystem durchgeführt, und nicht nur an der unmittelbar mit der zweiten Druckbereitstellungseinrichtung verbundenen ersten und dritten Radbremse.

Bevorzugt handelt es sich um ein Verfahren zum Betrieb der Bremsanlage bei hochautomatisiertem Fahren, wenn eine Bremsanforderung durch einen virtuellen Fahrer oder einen Autopiloten gestellt wird.

Die erste und die dritte Radbremse sind über das zweite Bremssystem (bzw. das jeweilige Abtrennventil des zweiten Bremssystems) mit dem ersten Bremssystem (und damit dem Hauptbremszylinder und der ersten Druckbereitstellungseinrichtung) hydraulisch verbunden, d.h. für die erste und die dritte Radbremse ist das zweite Bremssystem hydraulisch zwischen dem ersten Bremssystem und der ersten und dritten Radbremse angeordnet.

Bevorzugt ist ein erster Ausgangsdruckanschluss des ersten Bremssystems (für die erste Radbremse) mit einem ersten Eingangsdruckanschluss des zweiten Bremssystems (für die erste Radbremse) und ein dritter Ausgangsdruckanschluss des ersten Bremssystems (für die dritte Radbremse) mit einem zweiten Eingangsdruckanschluss des zweiten Bremssystems (für die dritte Radbremse) verbunden.

Das zweite Bremssystem umfasst bevorzugt eine erste hydraulische Verbindungsleitung, welche das erste Bremssystem (insbesondere den ersten Ausgangsdruckanschluss des ersten Bremssystems) mit der ersten Radbremse verbindet, und eine zweite hydraulische Verbindungsleitung, welche das erste Bremssystem (insbesondere den dritten Ausgangsdruckanschluss des ersten Bremssystems) mit der dritten Radbremse verbindet, wobei in der ersten und in der zweiten Verbindungsleitung jeweils das entsprechende Abtrennventil angeordnet ist.

Die zweite und die vierte Radbremse sind bevorzugt unmittelbar an das erste Bremssystem angeschlossen. Dies bedeutet, dass die zweite und die vierte Radbremse jeweils über eine Bremsleitung mit dem ersten Bremssystem hydraulisch verbunden ist, wobei in den Bremsleitungen für die zweite und die vierte Radbremse nach (bzw. stromabwärts) dem Ausgangsdruckanschluss des ersten Bremssystems kein elektrisch ansteuerbares Ventil angeordnet ist. In der Bremsleitung ist auch keine Pumpe o.ä. angeordnet. Besonders bevorzugt ist auch kein Rückschlagventil in der Bremsleitung angeordnet.

Bevorzugt ist ein zweiter Ausgangsdruckanschluss des ersten Bremssystems (für die zweite Radbremse) über eine (zweite) Bremsleitung unmittelbar mit der zweiten Radbremse und ein vierter Ausgangsdruckanschluss des ersten Bremssystems (für die vierte Radbremse) über eine (vierte) Bremsleitung unmittelbar mit der vierten Radbremse verbunden. Diese Bremsleitungen können außerhalb der Hydraulikeinheit des zweiten Bremssystems oder auch durch die Hydraulikeinheit des zweiten Bremssystems verlaufen. In beiden Fällen ist die zweite Druckbereitstellungseinrichtung jedoch nicht unmittelbar mit der zweiten und vierten Radbremse oder mit der zweiten oder vierten Bremsleitung verbunden.

Die erste und die dritte Radbremse sind bevorzugt den Rädern einer Vorderachse des Kraftfahrzeugs zugeordnet. Entsprechend sind die zweite und die vierte Radbremse den Rädern einer Hinterachse des Kraftfahrzeugs zugeordnet.

Die zweite Druckbereitstellungseinrichtung ist bevorzugt jeweils direkt mit der ersten bzw. der dritten Radbremse hydraulisch verbunden, d.h. es ist jeweils kein elektrisch betätigbares Ventil zwischen der zweiten Druckbereitstellungseinrichtung und der Radbremse angeordnet, welches einen Strömungswiderstand darstellen könnte.

Bevorzugt ist die zweite Druckbereitstellungseinrichtung druckseitig mit den hydraulischen Verbindungen zwischen erstem Bremssystem und erster bzw. dritter Radbremse in einem Bereich zwischen dem Abtrennventil und der Radbremse, d.h. stromabwärts des jeweiligen Abtrennventils, verbunden.

Das erste Bremssystem umfasst bevorzugt für jede der vier Radbremsen einen (radindividuellen) Ausgangsdruckanschluss. Das zweite Bremssystem umfasst bevorzugt für die erste und die dritte Radbremsen einen radindividuellen Eingangsdruckanschluss sowie einen radindividuellen Ausgangsdruckanschluss. Dabei ist jeweils der Eingangsdruckanschluss des zweiten Bremssystems mit dem der Radbremse zugeordneten Ausgangsdruckanschluss des ersten Bremssystems und der Ausgangsdruckanschluss des zweiten Bremssystems mit der Radbremse verbunden.

Bevorzugt wird zum Bremsdruckaufbau in der zweiten und vierten Radbremse Druckmittel von der zweiten Druckbereitstellungseinrichtung über die Abtrennventile und das erste Bremssystem zu der zweiten und der vierten Radbremse gefördert.

Bevorzugt ist die erste elektrisch steuerbare Druckbereitstellungseinrichtung über zumindest ein elektrisch betätigbares Zuschaltventil mit den vier Radbremsen hydraulisch verbunden.

Gemäß einer bevorzugten Ausführungsform der Erfindung wird zum Bremsdruckaufbau in der zweiten und der vierten Radbremse mittels der zweiten Druckbereitstellungseinrichtung wenigstens eines der Ventile des ersten Bremssystems betätigt. Da elektrisch betätigbare Komponenten des ersten und des zweiten Bremssystems betätigt werden, wird dieses Betriebsverfahren auch als kooperatives Betriebskonzept von erstem und zweitem Bremssystem bezeichnet. Das kooperative Betriebskonzept ermöglicht eine verbesserte Gesamtbremswirkung, verhindert oder mindert Gierstörungen des Fahrzeuges bei der Abbremsung und ermöglicht die Kontrolle der Bremsanlage bei einer überlagerten Bremsbetätigung durch den menschlichen Fahrer.

Bevorzugt wird beim Bremsdruckaufbau in der zweiten und der vierten Radbremse mittels der zweiten Druckbereitstellungseinrichtung das zumindest eine Trennventil des ersten Bremssystems geschlossen. Das Trennventil wird auch geschlossen, wenn keine Bremspedalbetätigung durch den Fahrer vorliegt und ein Bremswunsch des virtuellen Fahrers (Autopiloten) vorliegt. So wird der Hauptbremszylinder von den Radbremsen abgetrennt. Die zweite bzw. vierte Radbremse ist über das erste Bremssystem ebenfalls an die zweite Druckbereitstellungseinrichtung angekoppelt und erreicht im stationären Fall den identischen Bremsdruck wie die erste bzw. dritte Radbremse.

Wenn das erste Bremssystem eine Simulationseinrichtung umfasst, welche hydraulisch mit dem Hauptbremszylinder verbunden ist, wobei der Simulationseinrichtung ein elektrisch betätigbares Simulatorventil zugeordnet ist, mittels dem die Simulationseinrichtung zu- und abschaltbar ist, so wird im Falle einer Betätigung des Bremspedals durch den Fahrer die Simulationseinrichtung mittels des Simulatorventils während des Bremsdruckaufbaus mittels der zweiten Druckbereitstellungseinrichtung zugeschaltet. So kann Druckmittel von dem Hauptbremszylinder in die Simulationseinrichtung fließen.

Bevorzugt wird die Betätigung des Bremspedals mittels eines Sensors des ersten Bremssystems erfasst und das Signal des Sensors bei der Ansteuerung der zweiten Druckbereitstellungseinrichtung berücksichtigt.

Einer der vorgegebenen Zustände der Bremsanlage zum Bremsdruckaufbau in der zweiten und der vierten Radbremse mittels der zweiten Druckbereitstellungseinrichtung liegt bevorzugt dann vor, wenn ein Druckaufbau mittels der ersten Druckbereitstellungseinrichtung nicht möglich ist. Dann wird die Bremsanforderung durch einen virtuellen Fahrer oder einen Autopiloten mittels der zweiten Druckbereitstellungseinrichtung durchgeführt.

Einer der vorgegebenen Zustände der Bremsanlage liegt bevorzugt dann vor (d.h. der Bremsdruckaufbau in der zweiten und der vierten Radbremse mittels der zweiten Druckbereitstellungseinrichtung wird durchgeführt), wenn zupsätzlich die elektrische Betätigung des zumindest einen Trennventils des ersten Bremssystems möglich ist, d.h. wenn die Betätigung des Trennventils oder der Trennventile des ersten Bremssystems funktionsfähig ist. Andernfalls kann der Hauptbremszylinder nicht von den Radbremsen getrennt werden.

Einer der vorgegebenen Zustände der Bremsanlage liegt bevorzugt dann vor, wenn zusätzlich die elektrische Betätigung eines zum Zu- oder Abschalten einer Simulationseinrichtung vorgesehenen, elektrisch betätigbaren Simulatorventils möglich ist, d.h. wenn die Betätigung des Simulatorventils des ersten Bremssystems funktionsfähig ist. Andernfalls kann die Simulationseinrichtung nicht zugeschaltet werden und es kann kein Druckmittel von dem Hauptbremszylinder in die Simulationseinrichtung verschoben werden.

Einer der vorgegebenen Zustände der Bremsanlage liegt bevorzugt vor, wenn zusätzlich eine Erfassung einer Betätigung des Bremspedals mittels eines Sensors des ersten Bremssystems möglich ist.

Einer der vorgegebenen Zustände der Bremsanlage liegt bevorzugt vor, wenn nur ein ungenügender oder nicht quantifizierbarer Druckaufbau mittels der ersten Druckbereitstellungseinrichtung möglich ist. Dies ist z.B. dann gegeben, falls eine Drucksensierung der ersten Druckbereitstellungseinrichtung (z.B. mittels eines der ersten Druckbereitstellungseinrichtung zugeordneten Drucksensors) nicht möglich oder fehlerhaft ist.

Einer der vorgegebenen Zustände der Bremsanlage liegt vor (d.h. der Bremsdruckaufbau in der zweiten und der vierten Radbremse mittels der zweiten Druckbereitstellungseinrichtung wird durchgeführt), wenn in einem dem ersten Bremssystem zugeordneten, insbesondere unter Atmosphärendruck stehenden, ersten Druckmittelvorratsbehälter ein Druckmittelstand vorliegt, der niedriger als ein vorgegebener Druckmittelschwellenwert ist. Der Bremsdruckaufbau wird dann mittels der zweiten Druckbereitstellungseinrichtung mit Druckmittel aus dem oder den dem zweiten Bremssystem zugeordneten, zweiten Druckmittelvorratsbehälter(n) durchgeführt.

Das erste Bremssystem wird auch als Primärbremssystem und das zweite Bremssystem als Sekundärbremssystem bezeichnet.

Erstes und zweites Bremssystem sind bevorzugt als separate Module (Einheiten) bzw. als separate elektrohydraulische Steuer- und Regeleinheiten ausgebildet, welches jeweils eine Hydraulikeinheit (bzw. hydraulische Steuer- und Regeleinheit) und eine Elektronikeinheit (bzw. elektronische Steuer- und Regeleinheit) umfassen. Es ist jedoch auch möglich, dass das erste und zweite Bremssystem, insbesondere deren hydraulische Komponenten, in einer Einheit bzw. einem Modul (z.B. in einem Gehäuse oder in einer Hydraulikeinheit / hydraulischen Steuer- und Regeleinheit) angeordnet sind. Auch dann ist es vorteilhaft, wenn jedem der Bremssysteme eine separate Elektronikeinheit bzw. elektronische Steuer- und Regeleinheit zugeordnet ist zur Ansteuerung der entsprechenden Druckbereitstellungseinrichtung und Ventile des jeweiligen Bremssystems.

Bevorzugt umfasst das erste Bremssystem eine Simulationseinrichtung, welche hydraulisch mit dem Hauptbremszylinder verbunden ist, wobei der Simulationseinrichtung ein elektrisch betätigbares Simulatorventil zugeordnet ist, mittels dem die Simulationseinrichtung zu- und abschaltbar ist. Die Simulationseinrichtung soll dem Fahrer bei einer Trennung des Hauptbremszylinders von den Radbremsen, z.B. in einer "brake-by-wire"-Betriebsart ein bekanntes Bremspedalgefühl vermitteln.

Bevorzugt umfasst das erste Bremssystem für jede der vier Radbremsen zumindest ein elektrisch betätigbares Einlassventil zum Einstellen radindividueller Bremsdrücke. Das Einlassventil ist jeweils zwischen der ersten Druckbereitstellungseinrichtung und der Radbremse angeordnet.

Das der zweiten Radbremse zugeordnete Einlassventil ist besonders bevorzugt unmittelbar mit der zweiten Radbremse verbunden, das der vierten Radbremse zugeordnete Einlassventil ist besonders bevorzugt unmittelbar mit der vierten Radbremse verbunden. Das der ersten Radbremse zugeordnete Einlassventil ist, insbesondere unmittelbar, mit dem der ersten Radbremse zugeordneten Abtrennventil des zweiten Bremssystems verbunden, das der dritten Radbremse zugeordnete Einlassventil ist, insbesondere unmittelbar, mit dem der dritte Radbremse zugeordneten Abtrennventil verbunden. Das Abtrennventil des zweiten Bremssystems ist also jeweils in einer hydraulischen Verbindung zwischen dem Einlassventil des ersten Bremssystems und der entsprechenden Radbremse angeordnet.

Bevorzugt wird in den vorgegebenen Zuständen der Bremsanlage bzw. während des kooperativen Betriebskonzepts eine Bremsdruckregelung, insbesondere Schlupfregelung, durchgeführt, wobei eine Begrenzung eines Radbremsdruckes an der zweiten oder der vierten Radbremse durch ein Schließen des der entsprechenden Radbremse zugeordneten Einlassventils des ersten Bremssystems erfolgt.

Bevorzugt sind das Einlassventil der ersten Radbremse und das Einlassventil der zweiten Radbremse eingangsseitig (d.h. an ihren den Radbremsen abgewandten Anschlüssen) über eine erste Bremskreisversorgungsleitung miteinander verbunden. Bevorzugt sind das Einlassventil der dritten Radbremse und das Einlassventil der vierten Radbremse eingangsseitig (d.h. an ihren den Radbremsen abgewandten Anschlüssen) über eine zweite Bremskreisversorgungsleitung miteinander verbunden. Die erste Bremskreisversorgungsleitung ist über ein erstes Trennventil mit dem Hauptbremszylinder und über ein erstes Zuschaltventil mit der ersten Druckbereitstellungseinrichtung verbunden. Die zweite Bremskreisversorgungsleitung ist über ein zweites Trennventil mit dem Hauptbremszylinder und über ein zweites Zuschaltventil mit der ersten Druckbereitstellungseinrichtung verbunden. Besonders bevorzugt sind die Trennventile stromlos offen und die Zuschaltventile stromlos geschlossen ausgeführt.

Das zweite Bremssystem umfasst bevorzugt wenigstens einen, insbesondere unter Atmosphärendruck stehenden, zweiten Druckmittelvorratsbehälter, aus welchem die zweite Druckbereitstellungseinrichtung Druckmittel ansaugen kann. Besonders bevorzugt ist der zweite Druckmittelvorratsbehälter in die Hydraulikeinheit des zweiten Bremssystems integriert. Dadurch kann verhindert werden, dass durch eine undichte oder zerstörte hydraulische Leitung zu einem dem ersten Bremssystem zugeordneten Druckmittelvorratsbehälter bei Bedarf nicht genug Druckmittel zur Verfügung steht.

Das zweite Bremssystem umfasst bevorzugt zumindest ein stromlos geschlossenes Abbauventil, wobei die zweite Druckbereitstellungseinrichtung druckseitig über das mindestens eine Abbauventil mit dem zweiten Druckmittelvorratsbehälter verbunden ist.

Ein Bremsdruckabbau in der zweiten oder der vierten Radbremse während des kooperativen Betriebskonzepts erfolgt bevorzugt durch ein Öffnen des mindesten einen Abbauventils.

Bevorzugt ist die zweite Druckbereitstellungseinrichtung saugseitig über zumindest ein stromlos geschlossenes Ansaugventil mit dem mindestens einen zweiten Druckmittelvorratsbehälter verbunden.

Zum Bremsdruckaufbau in der zweiten und der vierten Radbremse mittels der zweiten Druckbereitstellungseinrichtung während des kooperativen Betriebskonzepts wird bevorzugt das mindestens eine Ansaugventil geöffnet.

Bevorzugt ist die zweite Druckbereitstellungseinrichtung zweikreisig ausgeführt mit einem ersten Kreis für die erste Radbremse und einem zweiten Kreis für die dritte Radbremse.

Vorteilhafterweise umfasst die zweite Druckbereitstellungseinrichtung zwei Pumpen, die von einem Elektromotor gemeinsam angetrieben werden.

Bevorzugt umfasst das zweite Bremssystem zwei unter Atmosphärendruck stehende, zweite Druckmittelvorratsbehälter. Besonders bevorzugt ist die Saugseite der ersten Pumpe hydraulisch über eine erste Saugleitung mit dem einen zweiten Druckmittelvorratsbehälter und die Saugseite der zweiten Pumpe hydraulisch über eine zweite Saugleitung mit dem anderen zweiten Druckmittelvorratsbehälter verbunden. Bevorzugt stellt jeweils ein zweiter Druckmittelvorratsbehälter die Bremsflüssigkeit für genau eine der Radbremsen (erste oder dritte Radbremse) bereit.

Vorteilhafterweise ist in jede der Saugleitungen ein stromlos geschlossenes Ansaugventil geschaltet.

Vorteilhafterweise ist die erste Pumpe druckseitig mit der hydraulischen Verbindung zwischen dem ersten Bremssystem und der dritten Radbremse in einem Bereich zwischen dem Abtrennventil und der dritten Radbremse, d.h. stromabwärts des zugehörigen Abtrennventils, verbunden. Vorteilhafterweise ist die zweite Pumpe druckseitig mit der hydraulischen Verbindung zwischen dem ersten Bremssystem und der ersten Radbremse in einem Bereich zwischen dem Abtrennventil und der ersten Radbremse, d.h. stromabwärts des zugehörigen Abtrennventils, verbunden.

Von der hydraulischen Verbindung zwischen dem ersten Bremssystem und der erster Radbremse zweigt in einem Bereich zwischen dem Abtrennventil und der ersten Radbremse eine erste hydraulische Rückführleitung ab, die mit dem zugeordneten zweiten Druckmittelvorratsbehälter hydraulisch verbunden ist. Entsprechend zweigt von der hydraulischen Verbindung zwischen dem ersten Bremssystem und der dritten Radbremse in einem Bereich zwischen dem entsprechenden Abtrennventil und der dritten Radbremse eine zweite hydraulische Rückführleitung ab, die mit dem anderen zweiten Druckmittelvorratsbehälter hydraulisch verbunden ist. Auf diese Weise kann gezielt Druckmittel aus der entsprechenden Radbremse abgeführt werden. Dies ermöglicht das Einstellen verschiedener Bremsdrücke in der mit dem zweiten Bremssystem unmittelbar hydraulisch verbundenen ersten und dritten Radbremse.

In die jeweilige Rückführleitung ist vorteilhafterweise ein stromlos geschlossenes Abbauventil geschaltet. Das Abbauventil wird bevorzugt während eines Druckaufbaus in seine Trennstellung geschaltet und bedarfsweise zum Druckabbau in der jeweiligen Radbremse in seine Durchlassstellung geschaltet.

Die zweiten Druckmittelvorratsbehälter sind bevorzugt mit einer hydraulischen Ausgleichsleitung miteinander verbunden, welche mit dem ersten Druckmittelvorratsbehälter verbunden ist.

Das zweite Bremssystem umfasst bevorzugt einen ersten Drucksensor, der den Druck in der ersten Radbremse misst, und einen zweiten Drucksensor, der den Druck in der dritten Radbremse misst, so dass auch im zweiten Bremssystem eine Druckregelung erfolgen kann.

Die Erfindung betrifft auch eine Bremsanlage, in welcher ein erfindungsgemäßes Verfahren durchgeführt wird.

Bevorzugt umfasst das erste Bremssystem einen mittels eines Bremspedals betätigbaren Hauptbremszylinder mit einem ersten und einem zweiten Druckraum, wobei der erste Druckraum über ein elektrisch betätigbares erstes Trennventil mit der dritten und der vierten Radbremse hydraulisch verbunden ist und der zweite Druckraum über ein elektrisch betätigbares zweites Trennventil mit der ersten und der zweiten Radbremse hydraulisch verbunden ist, sowie eine erste elektrisch steuerbare Druckbereitstellungseinrichtung, welche über ein elektrisch betätigbares erstes Zuschaltventil mit der dritten und der vierten Radbremse hydraulisch verbunden ist und welche über ein elektrisch betätigbares zweites Zuschaltventil mit der ersten und der zweiten Radbremse hydraulisch verbunden ist.

Bevorzugt umfasst das zweite Bremssystem als zweite elektrisch steuerbare Druckbereitstellungseinrichtung eine erste und eine zweite Pumpe, welche durch einen Elektromotor gemeinsam angetrieben werden, wobei die erste Pumpe druckseitig mit der dritten Radbremse hydraulisch verbunden ist und die zweite Pumpe druckseitig mit der ersten Radbremse hydraulisch verbunden ist. Vorteilhafterweise ist die jeweilige Pumpe druckseitig mit der hydraulischen Verbindung zwischen dem ersten Bremssystem und der (entsprechenden) Radbremse in einem Bereich zwischen dem Abtrennventil und der Radbremse, d.h. stromabwärts des Abtrennventils, verbunden.

Besonders bevorzugt ist die zweite Druckbereitstellungseinrichtung bwz. die jeweilige Pumpe druckseitig direkt mit der ersten bzw. dritten Radbremse hydraulisch verbunden, d.h. insbesondere ohne Zwischenschaltung eines elektrisch betätigbaren Ventils.

Weitere bevorzugte Ausführungsformen der Erfindung ergeben sich aus den Ansprüchen und der nachfolgenden Beschreibung anhand von Figuren.

Es zeigen stark schematisch:
- Fig. 1: ein hydraulisches Schaltbild einer beispielsgemäßen Bremsanlage zur Durchführung eines erfindungsgemäßen Verfahrens,
- Fig. 2: die beispielsgemäße Bremsanlage der Fig. 1 in einem ersten Betriebszustand, und
- Fig. 3: die beispielsgemäße Bremsanlage der Fig. 1 in einem dritten Betriebszustand während der Durchführung eines erfindungsgemäßen Verfahrens.

Gleiche Teile sind in allen Figuren mit denselben Bezugszeichen versehen.

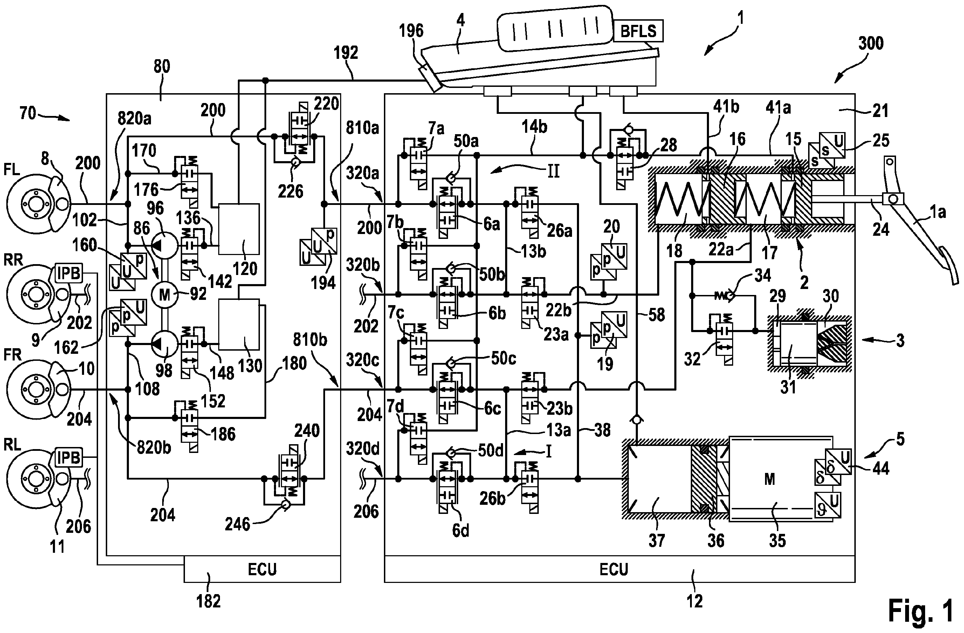

In Fig. 1 ist eine beispielsgemäße Bremsanlage 1 zur Durchführung eines erfindungsgemäßen Verfahrens dargestellt. Die Bremsanlage umfasst ein erstes Bremssystem (Primärbremssystem) 300, ein zweites Bremssystem (Sekundärbremssystem) 70 und vier hydraulisch betätigbare Radbremsen 8-11. Eine Erweiterung auf mehr als vier Radbremsen ist einfach möglich.

Beispielsgemäß sind das erste Bremssystem 300 und das zweites Bremssystem 70 jeweils als ein separates Modul (elektrohydraulische Steuer- und Regeleinheit HECU) ausgebildet. Es ist jedoch auch möglich, dass Primärbremssystem 300 und Sekundärbremssystem 70 in einer Einheit/einem Modul (z.B. in einem Gehäuse) angeordnet sind. Beispielsgemäß umfasst die elektrohydraulische Steuer- und Regeleinheit des ersten Bremssystems eine Hydraulikeinheit (bzw. hydraulische Steuer- und Regeleinheit) 21 und eine Elektronikeinheit (bzw. elektronische Steuer- und Regeleinheit) 12 und die elektrohydraulische Steuer- und Regeleinheit des zweiten Bremssystems eine Hydraulikeinheit (bzw. hydraulische Steuer- und Regeleinheit) 80 und eine Elektronikeinheit (bzw. elektronische Steuer- und Regeleinheit) 182.

Das erste Bremssystem 300 umfasst einen mittels eines Bremspedals 1a betätigbaren Hauptbremszylinder 2, eine mit dem Hauptbremszylinder 2 zusammenwirkende Simulationseinrichtung 3, einen dem Hauptbremszylinder 2 zugeordneten, unter Atmosphärendruck stehenden ersten Druckmittelvorratsbehälter 4, eine erste elektrisch steuerbare Druckbereitstellungseinrichtung 5, eine elektrisch steuerbare Druckmodulationseinrichtung zum Einstellen radindividueller Bremsdrücke und eine elektronische Steuer- und Regeleinheit (ECU) 12.

Das erste Bremssystem 300 umfasst für jede der Radbremsen 8-11 einen radindividuellen Ausgansdruckanschluss 320a-320d.

Der zweite Ausgangsdruckanschluss 320b des ersten Bremssystems 300 ist über eine Bremsleitung 202 unmittelbar mit der zweiten Radbremse 9 und der vierte Ausgangsdruckanschluss 320d des ersten Bremssystems 300 ist über eine Bremsleitung 206 unmittelbar mit der vierten Radbremse 11 verbunden. Die Bremsleitungen 202, 206 können, wie in Fig. 1 dargestellt, außerhalb der Hydraulikeinheit 80 des zweiten Bremssystems 70 oder auch durch die Hydraulikeinheit 80 verlaufen.

Der erste Ausgangsdruckanschluss 320a des ersten Bremssystems 300 ist über eine Bremsleitung 200 mit der ersten Radbremse 8 und der dritte Ausgangsdruckanschluss 320c des ersten Bremssystems 300 ist über eine Bremsleitung 204 mit der dritten Radbremse 10 verbunden, wobei die Bremsleitungen 200, 204 zumindest teilweise/stückweise ein Teil des zweiten Bremssystems 70 sind bzw. beispielsgemäß teilweise/stückweise in der Hydraulikeinheit 80 verlaufen.

Das zweite Bremssystem 70 umfasst also eine erste hydraulische Verbindung bzw. Verbindungsleitung (Bremsleitung 200 oder zumindest ein Teil der Bremsleitung 200), welche das erste Bremssystem 300 (insbesondere den ersten Ausgangsdruckanschluss 320a des ersten Bremssystems) mit der ersten Radbremse 8 verbindet, und eine zweite hydraulische Verbindung bzw. Verbindungsleitung (Bremsleitung 204 oder zumindest ein Teil der Bremsleitung 204), welche das erste Bremssystem 300 (insbesondere den dritten Ausgangsdruckanschluss 320c des ersten Bremssystems) mit der dritten Radbremse 10 verbindet.

Anders ausgedrückt, dem ersten Bremssystems 300 ist für die Radbremsen 8 und 10 das zweite Bremssystem 70 hydraulisch nachgeschaltet bzw. das zweite Bremssystem 70 ist für die Radbremsen 8 und 10 hydraulisch in Reihe zwischen das erste Bremssystem und die Radbremsen 8 und 10 geschaltet.

Entsprechend umfasst das zweite Bremssystem 70 einen ersten Eingangsdruckanschluss 810a, welcher mit dem ersten Ausgangsdruckanschluss 320a des ersten Bremssystems verbunden ist, und einen dem ersten Eingangsdruckanschluss 810a zugeordneten ersten Ausgangsdruckanschluss 820a, welcher mit der ersten Radbremse 8 verbunden ist, sowie einen zweiten Eingangsdruckanschluss 810b, welcher mit dem dritten Ausgangsdruckanschluss 320c des ersten Bremssystems verbunden ist, und einen dem zweiten Eingangsdruckanschluss 810b zugeordneten zweiten Ausgangsdruckanschluss 820b, welcher mit der dritten Radbremse 10 verbunden ist.

Das zweite Bremssystem 70 umfasst eine zweite elektrisch steuerbare Druckbereitstellungseinrichtung 86, welche mit den Radbremsen 8 und 10 bzw. den Bremsleitungen 200 und 204 der hydraulisch verbunden ist, und ein Abtrennventil 220, 240 für jede der Radbremsen 8, 10, welches in der hydraulischen Verbindung 200, 204 zwischen dem ersten Bremssystem 300 und der entsprechenden Radbremse 8, 10 angeordnet ist. Weiterhin umfasst das zweite Bremssystem 70 weitere elektrisch betätigbare Ventile 176, 186 und 142, 152, u.a. zum Einstellen radindividueller Bremsdrücke an der Radbremsen 8, 10, zumindest einen unter Atmosphärendruck stehenden (zweiten) Druckmittelvorratsbehälter 120, 130 und eine elektronische Steuer- und Regeleinheit (ECU) 182.

Dem Abtrennventil 220 ist ein Rückschlagventil 226 parallel geschaltet, welches bei gesperrtem Abtrennventil 220 den Rückfluss von Druckmittel aus der ersten Radbremse 8 verhindert. Entsprechend ist dem Abtrennventil 240 ein Rückschlagventil 246 parallel geschaltet, welches bei gesperrtem Abtrennventil 240 den Rückfluss von Druckmittel aus der dritten Radbremse 10 verhindert.

Ein Drucksensor 194 misst den Druck in der Bremsleitung 200.

Vorteilhafterweise sind die an das zweite Bremssystem 70 angeschlossenen Radbremsen 8 und 10 den Vorderräder FL und FR des Fahrzeugs zugeordnet (FL: linkes Vorderrad, FR: rechtes Vorderrad). Die an das erste Bremssystem 300 angeschlossenen Radbremsen 9 und 11 sind den Hinterräder RR und RL des Fahrzeugs zugeordnet (RL: linkes Hinterrad, RR: rechtes Hinterrad). Dies entspricht einer diagonalen Bremskreisaufteilung im ersten Bremssystem 300.

Die Druckmodulationseinrichtung des ersten Bremssystems umfasst beispielsgemäß je Radbremse 8-11 ein elektrisch betätigbares Einlassventil 6a-6d und ein elektrisch betätigbares Auslassventil 7a-7d, die paarweise über Mittenanschlüsse hydraulisch zusammengeschaltet und für jede Radbremse 8-11 mit dem entsprechenden Ausgangsdruckanschluss 320a-320d der Radbremse verbunden sind. Die Eingangsanschlüsse der Einlassventile 6a, 6b bzw. 6c, 6d sind jeweils über eine Bremskreisversorgungsleitung 13a bzw. 13b verbunden. Den Einlassventilen 6a-6d ist jeweils ein zu den Bremskreisversorgungsleitungen 13a, 13b hin öffnendes Rückschlagventil 50a-50d parallel geschaltet. Die Ausgangsanschlüsse der Auslassventile 7a-7d sind über eine Rücklaufleitung 14b mit dem Druckmittelvorratsbehälter 4 verbunden.

Die Bremskreisversorgungsleitungen 13a, 13b sind sowohl mit dem Hauptbremszylinder 2 als auch mit der ersten Druckbereitstellungseinrichtung 5 verbunden.

Die Bremsen 8, 9 sind dabei einem zweiten Bremskreis II, die Bremsen 10, 11 einem ersten Bremskreis I hydraulisch zugeordnet.

Der Hauptbremszylinder 2 des ersten Bremssystems weist in einem Gehäuse bzw. einer Hydraulikeinheit 21 zwei hintereinander angeordnete Kolben 15, 16 auf, die die hydraulischen Druckräume 17, 18 begrenzen. Die Druckräume 17, 18 stehen über in den Kolben 15, 16 ausgebildete radiale Bohrungen sowie entsprechende Druckausgleichsleitungen 41a, 41b mit dem ersten Druckmittelvorratsbehälter 4 in Verbindung, wobei die Verbindungen durch eine Relativbewegung der Kolben 15, 16 in der Hydraulikeinheit 21 absperrbar sind. In der Druckausgleichsleitung 41a ist ein stromlos offenes Diagnoseventil 28 mit einem parallel geschalteten Rückschlagventil angeordnet. Jeder der Druckräume 17, 18 ist über eine hydraulische Leitung 22a, 22b und ein elektrisch betätigbares, vorzugsweise stromlos offen ausgeführtes, Trennventil 23a, 23b mit der entsprechenden Bremskreisversorgungsleitung 13a, 13b hydraulisch verbunden. Dem Druckraum 18ist der zweite Bremskreis II, dem Druckraum 17 der erste Bremskreis I zugeordnet.

Durch die Trennventile 23a, 23b kann die hydraulische Verbindung zwischen den Druckräumen 17, 18 des Hauptbremszylinders 2 und den Bremskreisversorgungsleitungen 13a, 13b abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Eine Kolbenstange 24 koppelt die Schwenkbewegung des Bremspedals 1a infolge einer Pedalbetätigung mit der Translationsbewegung des ersten Hauptbremszylinderkolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

Die Simulationseinrichtung (der Simulator) 3 des ersten Bremssystems 300 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z. B. eine Feder), welches vorteilhafterweise vorgespannt ist, an der Hydraulikeinheit 21 ab. Die Simulatorkammer 29 ist mittels eines elektrisch betätigbaren Simulatorventils 32 mit dem ersten Druckraum 17 des Hauptbremszylinders 2 verbindbar. Bei Vorgabe einer Pedalkraft und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen und Anbindungen der Simulationseinrichtung an den Hauptbremszylinder 2 sind denkbar.

Die (erste) elektrisch steuerbare Druckbereitstellungseinrichtung 5 ist als eine hydraulische Zylinder-Kolben-Anordnung bzw. ein einkreisiger elektrohydraulischer Aktuator ausgebildet, deren/dessen Druckkolben 36, welcher einen Druckraum 37 begrenzt, von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden.

Die Druckbereitstellungseinrichtung 5 ist mittels einer Systemdruckleitung 38 mit zwei elektrisch betätigbaren, vorzugsweise stromlos geschlossen ausgeführten, Zuschaltventilen 26a, 26b verbunden, wobei das Zuschaltventil 26a mit der Bremskreisversorgungsleitung 13a und das Zuschaltventil 26b mit der Bremskreisversorgungsleitung 13b verbunden ist. Die erste Druckbereitstellungseinrichtung ist also (mittels der Zuschaltventil) trennbar mit den vier Radbremsen 8-11 verbunden.

Ein durch eine Kraftwirkung des Kolbens 36 auf das in dem Druckraum 37 eingeschlossene Druckmittel erzeugte Aktuatordruck wird in die Systemdruckleitung 38 eingespeist und mit einem vorzugsweise redundant ausgeführten Drucksensor 19 erfasst. Bei geöffneten Zuschaltventilen 26a, 26b gelangt das Druckmittel in die vier Radbremsen 8-11 zu deren Betätigung, wobei das Druckmittel für die Radbremsen 9 und 11 unmittelbar und für die Radbremsen 8 und 10 über das zweite Bremssystem 70 in die Radbremse gelangt.

Ein Nachsaugen von Druckmittel in den Druckraum 37 ist durch ein Zurückfahren des Kolbens 36 bei geschlossenen Zuschaltventilen 26a, 26b durch eine Nachsaugleitung 58 mit einem Rückschlagventil möglich.

Die zweite Druckbereitstellungseinrichtung 86 umfasst beispielsgemäß einen Elektromotor 92, durch den bedarfsweise zwei Pumpen 96, 98 betrieben werden. Die Pumpe 96 ist druckseitig über eine hydraulische Leitung 102 mit der Bremsleitung 200 und damit der ersten Radbremse 8 hydraulisch verbunden. Die Pumpe 98 ist druckseitig über eine Leitung 108 mit der Bremsleitung 204 und damit der dritten Radbremse 10 verbunden.

Ein bevorzugt redundant ausgebildeter Drucksensor 160 misst den Druck in der Leitung 102; ein bevorzugt redundant ausgebildeter Drucksensor 162 misst den Druck in der Leitung 108. Die Steuer- und Regeleinheit 182 ist signaleingangsseitig mit den Drucksensoren 160, 162 verbunden.

Damit das zweite Bremssystem 70 im Bedarfsfall zuverlässig einen Bremsdruckaufbau durchführen kann, sind beispielsgemäß zwei zweite Druckmittelvorratsbehälter 120, 130 für Druckmittel vorgesehen, welche in der Hydraulikeinheit 80 integriert sind. Druckmittelvorratsbehälter 120 ist mit der Saugseite der Pumpe 96 über eine hydraulische Leitung 136 hydraulisch verbunden, in die ein elektrisch betätigbares, vorzugsweise stromlos geschlossenes, Ansaugventil 142 geschaltet ist. Druckmittelvorratsbehälter 130 ist saugseitig über eine hydraulische Leitung 148, in die ein elektrisch betätigbares, vorzugsweise stromlos geschlossenes, Ansaugventil 152 geschaltet ist, mit der Pumpe 98 hydraulisch verbunden.

Von der Bremsleitung 200 der ersten Radbremse 8 zweigt hinter dem Abtrennventil 220 eine hydraulische Rückführleitung 170 ab, die die Bremsleitung 200 mit dem zweite Druckmittelvorratsbehälter 120 hydraulisch verbindet, wobei in die Rückführleitung 170 ein elektrisch betätigbares, vorzugsweise stromlos geschlossenes, Abbauventil 176 geschaltet ist. Von der Bremsleitung 204 der dritten Radbremse 10 verzweigt hinter dem Abtrennventil 240 eine hydraulische Rückführleitung 180 ab, die die Bremsleitung 204 mit dem zweite Druckmittelvorratsbehälter 130 hydraulisch verbindet, wobei in die Rückführleitung 180 ein stromlos geschlossenes Abbauventil 186 geschaltet ist.

Eine gemeinsame hydraulische Ausgleichsleitung 192 verbindet die zweiten Druckmittelvorratsbehälter 120, 130 mit dem ersten Druckmittelvorratsbehälter 4.

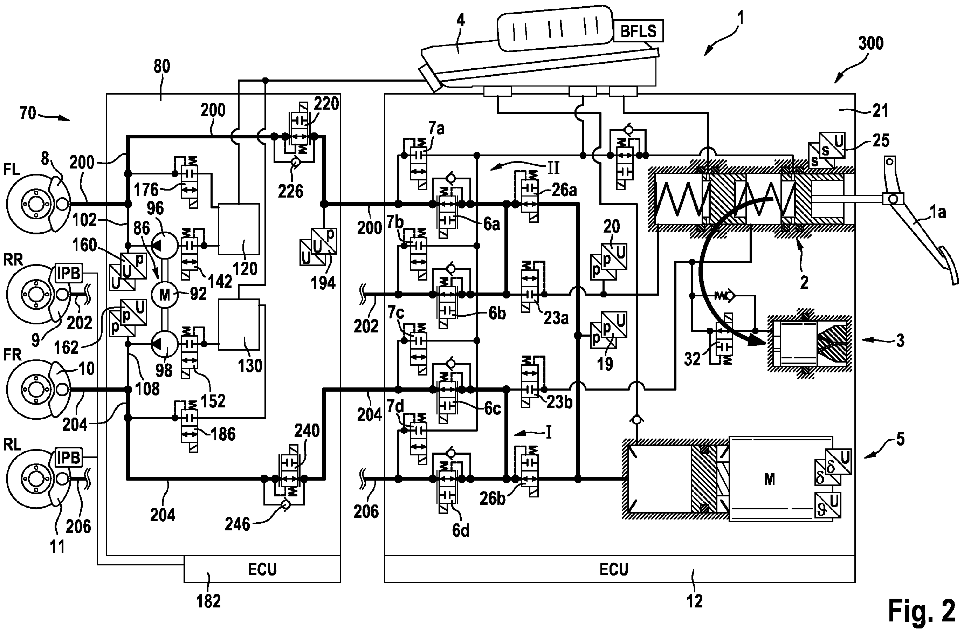

Fig. 2 zeigt die beispielsgemäße Bremsanlage 1 der Fig. 1 in einem Betriebszustand bei intaktem erstem Bremssystem 300 (erstes Betriebsverfahren) . Hier erfolgt die Druckbereitstellung für die vier Radbremsen 8-11 durch die erste Druckbereitstellungseinrichtung 5 des ersten Bremssystems 300. Eventuelle Druckmodulationen (z.B. eine Schlupfregelung) werden durch die Druckmodulationseinrichtung, d.h. die Einlass-/ und Auslassventile 6a-6d, 7a-7d des ersten Bremssystems 300 durchgeführt. Die Druckbereitstellung der Druckbereitstellungseinrichtung 5 erfolgt über die geöffneten Zuschaltventile 26a, 26b in die Radbremsen 8-11, was in Fig. 2 durch die verstärkten Striche angedeutet ist.

Das zweite Bremssystem ist passiv (z.B. stromlos), insbesondere sind die Abtrennventile 220, 240 offen.

Eine überlagerte Betätigung des Bremspedals 1a durch den menschlichen Fahrer erfolgt im sog. by-wire Betrieb, d.h. die Trennventile 23a, 23b des ersten Bremssystems 300 sind geschlossen und Druckmittel wird aus dem Hauptbremszylinder 2 über das geöffnete Simulatorventil 32 in die Simulationseinrichtung 3 verschoben (durch einen Pfeil in Fig. 2 angedeutet). Aus den Signalen des dabei aufgebrachten Kolbenstangenweges und des Hauptbremszylinderdrucks (Drucksensor 20) wird ein Fahrerbremswunschsignal abgeleitet und dem virtuellen Fahrer (Autopiloten) zur Arbitrierung (Priorisierung) zur Verfügung gestellt.

Wenn das erste Bremssystem 300 eine Fehlfunktion aufweist oder (komplett) ausfällt, wird die beispielsgemäße Bremsanlage 1 der Fig. 1 in einem zweiten Betriebsverfahren betrieben. Hierbei ist das erste Bremssystem passiv (stromlos) und ein Bremswunsch des virtuellen Fahrers (Autopiloten) wird ausschließlich durch das zweite Bremssystem 70 umgesetzt (sog. *exklusives* Betriebskonzept), indem Bremsdruck nur an den Vorderradbremsen 8, 10 aufgebaut wird. Dazu werden die beiden Abtrennventile 220, 240 in ihre Trennstellung geschaltet, so dass die Radbremsen 8, 10 von dem ersten Bremssystem 300 (und damit der ersten Druckbereitstellungseinrichtung 5 und dem Hauptbremszylinder 2) hydraulisch getrennt werden. Die elektronische Steuer- und Regeleinheit 182 steuert den Elektromotor 92 an, der die Pumpen 96, 98 antreibt. Die jeweilige Pumpe 96, 98 saugt aus dem jeweiligen Druckmittelvorratsbehälter 120, 130 bei geöffneten Ansaugventilen 142, 152 Druckmittel an und befördert dieses über die Leitungen 102, 108 und die Bremsleitungen 200, 204 in die Radbremse 8, 10. Während des Druckaufbaus sind die Abbauventile 176, 186 geschlossen. Ein Druckabbau in einer der Radbremsen 8, 10 kann mittels des zugeordneten Abbauventils 176, 186 bedarfsweise durchgeführt werden, indem Druckmittel in den jeweiligen Druckmittelvorratsbehälter 120, 130 abgelassen wird.

Dem zweiten Bremssystem 70 stehen also hierbei nur die Vorderradbremsen 8, 10 zur Verfügung. Dadurch ist die maximal erreichbare Verzögerung auf etwa 60% (abhängig von der Achslastverteilung des Fahrzeuges) begrenzt.

Der Ausfall des ersten Bremssystems 300 kann hierbei durch einen elektrischen Fehler einer Systemkomponente, aber auch durch hydraulische Fehler (Leckagen) der Gesamt-Bremsanlage bedingt sein, sofern diese hydraulischen Fehler zu einem kritischen niedrigen Druckmittelstand im ersten Druckmittelvorratsbehälter 4 führen.

Liegt eine Leckage in einem der beiden Vorderradbremskreise vor und erfolgt der Übergang in die elektrisch steuerbare Rückfallebene (d.h. in das zweite Betriebsverfahren) wegen des kritischen niedrigen Druckmittelstands, wird im weiteren Verlauf nur noch eine der Vorderradbremsen zur Abbremsung des Fahrzeuges wirksam sein.

Eine überlagerte Betätigung des Bremspedals 1a durch den menschlichen Fahrer während der Druckstellung durch das zweite Bremssystem 70, d.h. eine Fahrerübernahme, kann während des zweiten Betriebsverfahrens nicht durch das System kontrolliert erfolgen. Da bei passivem erstem Bremssystem 300 die Simulationseinrichtung 3 aufgrund des stromlos geschlossenen Simulatorventils 32 abgeschaltet ist, erfolgt durch die Bremspedalbetätigung eine Volumenverschiebung / Druckmittelverschiebung aus dem Hauptbremszylinder 2 (über die stromlos offenen Trenn- und Einlassventile 23a, 23b, 6a-6d) direkt in die (unmittelbar angeschlossenen) Hinterradbremsen 9, 11. Dies kann ggf. zu deren Überbremsen führen. Zudem erfolgt auch eine Druckerhöhung in den Vorderradbremsen 8, 10, sofern der vom menschlichen Fahrer aufgebrachte Hauptbremszylinderdruck den vom virtuellen Fahrer angeforderten und vom zweiten Bremssystem 70 in den Vorderradbremsen 8, 10 eingestellten Druck übersteigt. Dies ist durch das Vorhandensein der Rückschlagventile 226, 246 an den Abtrennventilen 220, 240 des zweiten Bremssystems 70 begründet.

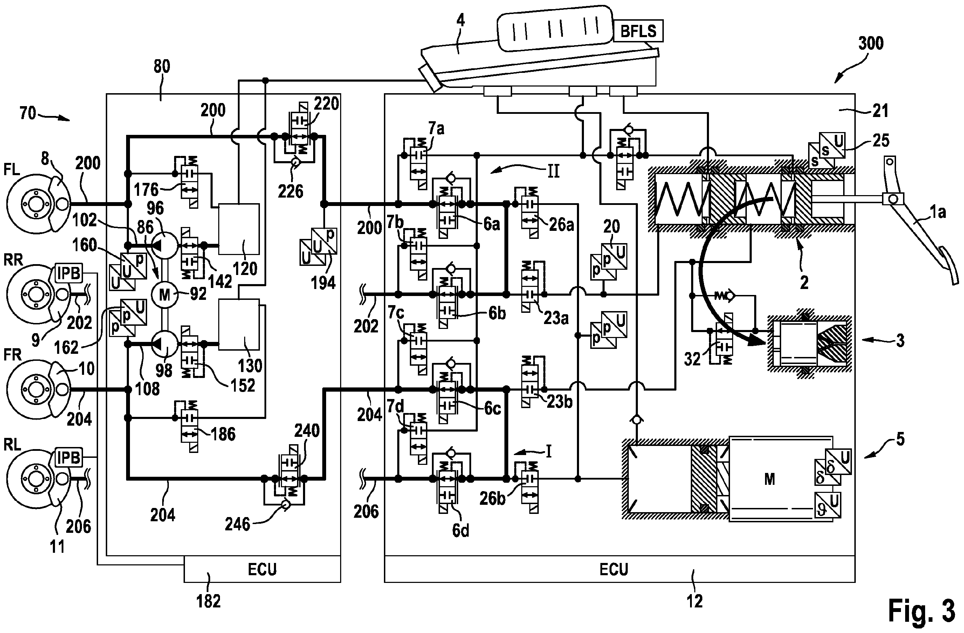

Fig. 3 zeigt die beispielsgemäße Bremsanlage der Fig. 1 in einem dritten Betriebszustand während einer Durchführung eines erfindungsgemäßen Verfahrens (sogenanntes *kooperatives* Betriebskonzept von erstem und zweitem Bremssystem).

In vorgegebenen Zuständen der Bremsanlage 1 wird ein *kooperatives* Betriebskonzept von erstem Bremssystem 300 und Sekundärbremssystem 70 durchgeführt. Hierbei wird ein Bremsdruckaufbau in der zweiten und der vierten Radbremse 9, 11 durchgeführt, indem bei geöffneten Abtrennventilen 220, 240 für die erste und dritte Radbremse 8, 10 die zweite Druckbereitstellungseinrichtung 86 angesteuert wird. Dies führt zu einem Bremsdruckaufbau an allen vier Radbremsen 8-11 mittels der zweiten Druckbereitstellungseinrichtung 86 des zweiten Bremssystems 70 (nicht nur an den mit dem zweiten Bremssystem 70 verbundenen Radbremsen 8, 10).

Der von der zweiten Druckbereitstellungseinrichtung 86 bereitgestellte Druck gelangt zum einen zu den unmittelbar mit dem zweiten Bremssystem 70 verbundenen Radbremsen 8, 10 und zum anderen über die offenen Abtrennventile 220, 240 zu dem ersten Bremssystem 300 und von dort zu den anderen Radbremsen 9, 11 (welche nicht unmittelbar mit dem zweiten Bremssystem 70 verbunden sind). Dies ist in Fig. 3 durch verstärkte Striche dargestellt.

Beispielsgemäß erfolgt die Umsetzung des Bremswunsches des virtuellen Fahrers durch das zweite Bremssystem 70 im kooperativen Betrieb mittels Druckaufbau durch die zweite Druckbereitstellungseinrichtung 86 (z.B. eine 2-Kolbenpumpe) bei offenen Abtrennventilen 220, 240 und geöffneten Ansaugventilen 142, 152 des zweiten Bremssystems 70, wodurch die Saugseiten der Pumpen 96, 98 mit den internen Druckmittelvorratsbehältern 120, 130 verbunden sind.

Beispielsgemäß erfolgt im ersten Bremssystem 300 eine Abtrennung des Hauptbremszylinders 2 durch Schließen der Trennventile 23a, 23b. Dadurch ist (je Bremskreis I, II) die jeweils zugeordnete (diagonal gegenüberliegende) Hinterradbremse 9, 11 ebenfalls (indirekt über das erste Bremssystem 300) an die zweite Druckbereitstellungseinrichtung 86 des zweiten Bremssystems 70 angekoppelt, erreicht also im stationären Fall den identischen Bremsdruck wie die diagonale Vorderradbremse 8, 10.

Weiterhin erfolgt im ersten Bremssystem 300 beispielsgemäß eine Zuschaltung der Simulationseinrichtung 3 durch Öffnen des Simulatorventils 32.

Ein Druckabbau erfolgt mittels der Abbauventile 176, 186 wieder in die internen Druckmittelvorratsbehälter 120, 130 des zweiten Bremssystems 70 zurück.

Eine Kreistrennung (Bremskreis I, II) ist hierbei stets sichergestellt, so dass dieser Betrieb auch bei nicht lokalisierten Leckagen durchgeführt werden kann. Wird aufgrund einer solchen Leckage einer der beiden internen Druckmittelvorratsbehälter 120, 130 des zweiten Bremssystems 70 erschöpft, bleibt die Fähigkeit zum Druckaufbau in zwei diagonalen Radbremsen erhalten, was eine deutlich erhöhte Restbremswirkung und eine reduzierte Gierstörung bewirkt.

Eine überlagerte Bremsbetätigung des menschlichen Fahrers am Bremspedal 1a erfolgt beispielsgemäß wie im by-wire Betrieb, d.h. das Simulatorventil 32 wird geöffnet (die Zuschaltventile 26 bleiben jedoch stromlos bzw. geschlossen) und die Bremspedalbetätigung führt zu einer Volumenverschiebung aus dem Hauptbremszylinder 2 in die zugeschaltete Simulationseinrichtung 3 (durch einen Pfeil in Fig. 3 angedeutet). Aus den Signalen des dabei aufgebrachten Kolbenstangenweges (z.B. mittels Wegsensor 25) und des Hauptbremszylinderdrucks (z.B. mittels Drucksensor 20) wird ein Fahrerbremswunschsignal abgeleitet und dem virtuellen Fahrer zur Arbitrierung (Priorisierung) zur Verfügung gestellt.

Da das kooperative Betriebskonzept stationär zur Druckgleichheit in einer Vorderrad- und einer Hinterradbremse (8, 9; 10, 11) führt, werden bevorzugt die im Folgenden erläuterten Konzepte zur Raddruckmodulation (Schlupfregelung) durchgeführt.

Um die Kreistrennung nicht aufzugeben (offenes System), wird ein Druckabbau nicht über die Auslassventile 7a-7d des ersten Bremssystems 300 durchgeführt.

Ein Druckstopp (Druckhalten) durch Schließen der Einlassventile 6a-6d des ersten Bremssystems 300 ist jedoch möglich und wird durchgeführt.

Die Druckstellung des zweiten Bremssystems 70 erfolgt bei einem Schlupfreglereingriff beispielsgemäß anhand der Solldruckwerte für die an das zweite Bremssystem 70 angeschlossenen Radbremsen 8, 10 (beispielsgemäß die Vorderradbremsen). Da die Einlassventile 6a-6d des Primärbremssystems 300 über Rückschlagventile 50a-50d verfügen, "führt" die Radbremse 8, 10 die andere Radbremse 9, 11 des Bremskreises I oder II (beispielsgemäß die diagonal gegenüberliegende Hinterradbremse). D.h. der Druck der Hinterradbremse wird den der Vorderradbremse nicht übersteigen.

Die Druckbegrenzung an der Radbremse 9, 11 (z.B. Hinterradbremse) erfolgt bevorzugt, indem das zweite Bremssystem 70 beim Erreichen eins gewissen (vorgegebenen) Drucks p_crit in der zugehörigen Radbremse 8, 10 (Vorderradbreme) ein Signal an das erste Bremssystem 300 zum Schließen des der jeweiligen Radbremse 9, 11 zugeordneten Einlassventils 6b, 6d gibt. Der Druckwert p_crit wird bevorzugt so gewählt werden, dass er zu einer (vorgegebenen) kritischen Verzögerung z_crit des Fahrzeuges passt.

Alternativ oder zusätzlich erfolgt die Druckbegrenzung an der Radbremse 9, 11 (z.B. Hinterradbremse) bevorzugt, indem das Signal zum Schließen des der jeweiligen Radbremse 9, 11 zugeordneten Einlassventils 6b, 6d beim Erreichen einer vorgegeben Fahrzeugverzögerung gegeben wird. Durch diese Methode wird das Verhalten eines mechanischen lastabhängigen Bremskraftbegrenzers nachgebildet.

Alternativ oder zusätzlich erfolgt die Druckbegrenzung an der Radbremse 9, 11 (z.B. Hinterradbremse) bevorzugt, indem das erste Bremssystem 300 aufgrund von Raddrehzahlsignalen entscheidet, wann der Druckstopp auszuführen ist (dynamisches EBV).

Das kooperative Betriebskonzept wird bevorzugt unter der Voraussetzung durchgeführt, dass der Ausfall des ersten Bremssystems 300 derart ausgeprägt ist, dass dieses weiterhin zumindest einzelne Ventile, insbesondere das oder die Trennventile 23a, 23b und das Simulatorventil 32, ansteuern und eine überlagerte Bremsbetätigung des menschlichen Fahrers sensieren kann.

Dies trifft auf alle Fehler des ersten Bremssystems 300 zu, die dazu führen, dass die erste Druckbereitstellungseinrichtung 5 die Fähigkeit zum Druckaufbau verliert.

Weiterhin wird der kooperative Betrieb bevorzugt auch dann durchgeführt, wenn das erste Bremssystem 300 aufgrund eines kritischen niedrigen Druckmittelstandes in dem ersten Druckmittelvorratsbehälter 4 versagt.

Bei einem anderen als den genannten Fehlermodi des ersten Bremssystems 300 wird bevorzugt weiterhin das exklusive Betriebskonzept als elektrisch steuerbare Rückfallebene durchgeführt, d.h. ein Bremswunsch wird ausschließlich durch das zweite Bremssystem umgesetzt, d.h. Ansteuerung der zweiten Druckbereitstellungseinrichtung bei geschlossenen Abtrennventilen 220, 240.

Die Erfindung erweitert den Anwendungsbereich der Bremsanlage erheblich bzw. macht diese für zu erwartende Anforderungen des hochautomatisierten Fahrens erst tauglich, indem sie Nachteile der hydraulischen Architektur der beispielsgemäßen Bremsanlage der Fig. 1 in Verbindung mit dem exklusiven Betriebskonzept beseitigt bzw. deren Auftretungswahrscheinlichkeit zumindest reduziert. Hierbei werden keine zusätzlichen Systemkomponenten benötigt, d.h. es wird eine kostengünstige Systemerweiterung realisiert.

Das erfindungsgemäße Verfahren für eine aus erstem und zweitem Bremssystem bestehende Bremsanlage beseitigt die folgenden wesentlichen Nachteile des Systemverhaltens in der elektrisch steuerbaren Rückfallebene, d.h. beim Einsatz des zweiten Bremssystems, bekannter Bremsanlagen:
- Druckaufbau grundsätzlich nur in den Vorderradbremsen 8, 10 und dadurch Begrenzung auf ca. 60% der möglichen Abbremsung.
- Druckaufbau in nur einer Vorderradbremse bei bestimmten hydraulischen Leckagen und in der Folge stark eingeschränkte Bremswirkung und Gierstörung des Fahrzeuges bei der Abbremsung.
- Nicht-Kontrollierbarkeit einer überlagerten Bremsbetätigung durch den menschlichen Fahrer.

## Patentansprüche

1. Verfahren zum Betrieb einer elektrohydraulischen Bremsanlage (1) für ein Kraftfahrzeug mit
• zumindest einer ersten, einer zweiten, einer dritten und einer vierten hydraulisch betätigbaren Radbremse (8, 9, 10, 11),
• einem ersten Bremssystem (300) umfassend einen mittels eines Bremspedals (1a) betätigbaren Hauptbremszylinder (2), welcher über zumindest ein elektrisch betätigbares Trennventil (23a, 23b) mit den vier Radbremsen (8, 9, 10, 11) hydraulisch verbunden ist, und eine erste elektrisch steuerbare Druckbereitstellungseinrichtung (5), welche, insbesondere über zumindest ein elektrisch betätigbares Zuschaltventil (26a, 26b), mit den vier Radbremsen (8, 9, 10, 11) hydraulisch verbunden ist, und
• einem zweiten Bremssystem (70) umfassend eine zweite elektrisch steuerbare Druckbereitstellungseinrichtung (86), welche mit der ersten und der dritten Radbremse (8, 10) hydraulisch verbunden ist, und je ein Abtrennventil (220, 240) für die erste und die dritte Radbremse (8, 10), wobei das Abtrennventil jeweils in einer hydraulischen Verbindung (200, 204) zwischen dem ersten Bremssystem (300) und der entsprechenden Radbremse (8, 10) angeordnet ist,
**dadurch gekennzeichnet, dass**
in vorgegebenen Zuständen der Bremsanlage (1) ein Bremsdruckaufbau in der zweiten und der vierten Radbremse (9, 11) durchgeführt wird, indem bei geöffneten Abtrennventilen (220, 240) die zweite Druckbereitstellungseinrichtung (86) angesteuert wird.

2. Verfahren nach Anspruch 1, **dadurch gekennzeichnet, dass** zum Bremsdruckaufbau in der zweiten und vierten Radbremse (9, 11) Druckmittel von der zweiten Druckbereitstellungseinrichtung (86) über die Abtrennventile (220, 240) und das erste Bremssystem (300) zu der zweiten und der vierten Radbremse gefördert wird.

3. Verfahren nach Anspruch 1 oder 2, **dadurch gekennzeichnet, dass** zum Bremsdruckaufbau in der zweiten und der vierten Radbremse (9, 11) mittels der zweiten Druckbereitstellungseinrichtung (86) wenigstens eines der Ventile (23a, 23b, 32) des ersten Bremssystems (300) betätigt wird.

4. Verfahren nach einem der Ansprüche 1 bis 3, **dadurch gekennzeichnet, dass** zum Bremsdruckaufbau in der zweiten und der vierten Radbremse (9, 11) mittels der zweiten Druckbereitstellungseinrichtung (86) das zumindest eine Trennventil (23a, 23b) des ersten Bremssystems geschlossen wird.

5. Verfahren nach einem der Ansprüche 1 bis 4, **dadurch gekennzeichnet, dass** das erste Bremssystem eine Simulationseinrichtung (3) umfasst, welche hydraulisch mit dem Hauptbremszylinder verbunden ist, wobei der Simulationseinrichtung ein elektrisch betätigbares Simulatorventil (32) zugeordnet ist, mittels dem die Simulationseinrichtung zu- und abschaltbar ist, und dass, im Falle einer Betätigung des Bremspedals (1a), die Simulationseinrichtung (3) mittels des Simulatorventils (32) während des Bremsdruckaufbaus mittels der zweiten Druckbereitstellungseinrichtung (86) zugeschaltet wird.

6. Verfahren nach einem der Ansprüche 1 bis 5, **dadurch gekennzeichnet, dass** einer der vorgegebenen Zustände der Bremsanlage vorliegt, wenn ein Druckaufbau mittels der ersten Druckbereitstellungseinrichtung (5) nicht möglich ist.

7. Verfahren nach Anspruch 6, **dadurch gekennzeichnet, dass** einer der vorgegebenen Zustände der Bremsanlage vorliegt, wenn zusätzlich die elektrische Betätigung des zumindest einen Trennventils (23a, 23b) des ersten Bremssystems (300) möglich ist.

8. Verfahren nach Anspruch 6 oder 7, **dadurch gekennzeichnet, dass** einer der vorgegebenen Zustände der Bremsanlage vorliegt, wenn zusätzlich die elektrische Betätigung eines zum Zu- oder Abschalten einer Simulationseinrichtung vorgesehenen, elektrisch betätigbaren Simulatorventils (32) möglich ist.

9. Verfahren nach einem der Ansprüche 6 bis 8, **dadurch gekennzeichnet, dass** einer der vorgegebenen Zustände der Bremsanlage vorliegt, wenn zusätzlich eine Erfassung einer Betätigung des Bremspedals (1a) mittels eines Sensors (20, 25) des ersten Bremssystems (300) möglich ist.

10. Verfahren nach einem der Ansprüche 1 bis 9, **dadurch gekennzeichnet, dass** einer der vorgegebenen Zustände der Bremsanlage vorliegt, wenn lediglich ein ungenügender oder nicht quantifizierbarer Druckaufbau mittels der ersten Druckbereitstellungseinrichtung (5) möglich ist.

11. Verfahren nach einem der Ansprüche 1 bis 10, **dadurch gekennzeichnet, dass** einer der vorgegebenen Zustände der Bremsanlage vorliegt, wenn in einem dem ersten Bremssystem (300) zugeordneten, insbesondere unter Atmosphärendruck stehenden, ersten Druckmittelvorratsbehälter (4) ein Druckmittelstand vorliegt, der niedriger als ein vorgegebener Druckmittelschwellenwert ist.

12. Verfahren nach einem der Ansprüche 1 bis 11, **dadurch gekennzeichnet, dass** das zweite Bremssystem (70) zumindest einen, insbesondere unter Atmosphärendruck stehenden, zweiten Druckmittelvorratsbehälter (120, 130) und zumindest ein stromlos geschlossenes Abbauventil (176, 186) umfasst, wobei die zweite Druckbereitstellungseinrichtung (86) druckseitig über das mindestens eine Abbauventil mit dem zweiten Druckmittelvorratsbehälter (120, 130) verbunden ist, und dass ein Bremsdruckabbau in der zweiten oder der vierten Radbremse (9, 11) durch ein Öffnen des mindesten einen Abbauventils (176, 186) erfolgt.

13. Verfahren nach Anspruch 12, **dadurch gekennzeichnet, dass** die zweite Druckbereitstellungseinrichtung (86) saugseitig über zumindest ein stromlos geschlossenes Ansaugventil (142, 152) mit dem mindestens einen zweiten Druckmittelvorratsbehälter (120, 130) verbunden ist, und dass zum Bremsdruckaufbau in der zweiten und der vierten Radbremse (9, 11) mittels der zweiten Druckbereitstellungseinrichtung (86) das mindestens eine Ansaugventil (142, 152) geöffnet wird.

14. Verfahren nach einem der Ansprüche 1 bis 13, **dadurch gekennzeichnet, dass** das erste Bremssystem (300) für jede der vier Radbremsen (8-11) ein elektrisch betätigbares Einlassventil (6a-6d) umfasst, welches zwischen der ersten Druckbereitstellungseinrichtung (5) und der Radbremse angeordnet ist, und dass in den vorgegebenen Zuständen der Bremsanlage eine Bremsdruckregelung, insbesondere Schlupfregelung, durchgeführt wird, wobei eine Begrenzung eines Radbremsdruckes an der zweiten oder der vierten Radbremse (9, 11) durch ein Schließen des der entsprechenden Radbremse zugeordneten Einlassventils des ersten Bremssystems (300) erfolgt.

15. Elektrohydraulische Bremsanlage (1) für ein Kraftfahrzeug, insbesondere für hochautomatisiertes Fahren, mit
• zumindest einer ersten, einer zweiten, einer dritten und einer vierten hydraulisch betätigbaren Radbremse (8, 9, 10, 11),
• einem ersten Bremssystem (300) umfassend einen mittels eines Bremspedals betätigbaren Hauptbremszylinder (2), welcher über zumindest ein elektrisch betätigbares Trennventil (23a, 23b) mit den vier Radbremsen hydraulisch verbunden ist, eine erste elektronische Steuer- und Regeleinheit (12) und eine erste elektrisch steuerbare Druckbereitstellungseinrichtung (5), welche, insbesondere über zumindest ein elektrisch betätigbares Zuschaltventil (26a, 26b), mit den vier Radbremsen hydraulisch verbunden ist, und
• einem zweiten Bremssystem (70) umfassend eine zweite elektrisch steuerbare Druckbereitstellungseinrichtung (86), welche mit der ersten und der dritten Radbremse (8, 10) hydraulisch verbunden ist, eine zweite elektronische Steuer- und Regeleinheit (182) und je ein Abtrennventil (220, 240) für die erste und die dritte Radbremse (8, 10), wobei das Abtrennventil jeweils in einer hydraulischen Verbindung (200, 204) zwischen dem ersten Bremssystem (300) und der entsprechenden Radbremse angeordnet ist,
**dadurch gekennzeichnet, dass**
in vorgegebenen Zuständen der Bremsanlage ein Bremsdruckaufbau in der zweiten und der vierten Radbremse (9, 11) durchgeführt wird, indem die zweite elektronische Steuer- und Regeleinheit (182) die zweite Druckbereitstellungseinrichtung (86) ansteuert, wobei die Abtrennventile (220, 240) geöffnet sind.

16. Bremsanlage (1) nach Anspruch 15, **dadurch gekennzeichnet, dass** die erste und die dritte Radbremse (8, 10) den Rädern einer Vorderachse des Kraftfahrzeugs und die zweite und die vierte Radbremse (9, 11) den Rädern einer Hinterachse des Kraftfahrzeugs zugeordnet sind.

17. Bremsanlage (1) nach Anspruch 15 oder 16, **dadurch gekennzeichnet, dass** zum Bremsdruckaufbau in der zweiten und der vierten Radbremse (9, 11) mittels der zweiten Druckbereitstellungseinrichtung (86) wenigstens eines der Ventile (23a, 23b, 32) des ersten Bremssystems (300) durch die erste elektronische Steuer- und Regeleinheit (12) elektrisch geschaltet wird, so dass Druckmittel von der zweiten Druckbereitstellungseinrichtung (86) über die Abtrennventile (220, 240) und das erste Bremssystem (300) zu der zweiten und vierten Radbremse (9, 11) gefördert wird.

18. Bremsanlage (1) nach einem der Ansprüche 15 bis 17, **dadurch gekennzeichnet, dass** in dieser ein Verfahren nach einem der Ansprüche 2 bis 14 durchgeführt wird.

## Claims

1. Method for operating an electrohydraulic brake installation (1) for a motor vehicle having
• at least one first, one second, one third and one fourth hydraulically actuatable wheel brake (8, 9, 10, 11),
• a first brake system (300) comprising a master brake cylinder (2) which is actuatable by means of a brake pedal (1a) and which is hydraulically connected by means of at least one electrically actuatable isolating valve (23a, 23b) to the four wheel brakes (8, 9, 10, 11), and comprising a first electrically controllable pressure provision device (5) which is hydraulically connected to the four wheel brakes (8, 9, 10, 11) in particular via at least one electrically actuatable sequence valve (26a, 26b), and
• a second brake system (70) comprising a second electrically controllable pressure provision device (86) which is hydraulically connected to the first and the third wheel brake (8, 10), and comprising in each case one isolating valve (220, 240) for the first and the third wheel brake (8, 10), wherein the isolating valve is arranged in each case in a hydraulic connection (200, 204) between the first brake system (300) and the corresponding wheel brake (8, 10),
**characterized in that**
in predefined states of the brake installation (1), a brake pressure build-up is performed in the second and the fourth wheel brake (9, 11) by virtue of the second pressure provision device (86) being activated with the isolating valves (220, 240) open.

2. Method according to Claim 1, **characterized in that**, for the brake pressure build-up in the second and fourth wheel brake (9, 11), pressure medium is conveyed by the second pressure provision device (86) via the isolating valves (220, 240) and the first brake system (300) to the second and the fourth wheel brake.

3. Method according to Claim 1 or 2, **characterized in that**, for the brake pressure build-up in the second and the fourth wheel brake (9, 11) by means of the second pressure provision device (86), at least one of the valves (23a, 23b, 32) of the first brake system (300) is actuated.

4. Method according to any of Claims 1 to 3, **characterized in that**, for the brake pressure build-up in the second and the fourth wheel brake (9, 11) by means of the second pressure provision device (86), the at least one isolating valve (23a, 23b) of the first brake system is closed.

5. Method according to any of Claims 1 to 4, **characterized in that** the first brake system comprises a simulation device (3) which is hydraulically connected to the master brake cylinder, wherein the simulation device is assigned an electrically actuatable simulator valve (32) by means of which the simulation device is connectable and disconnectable, and **in that**, in the event of an actuation of the brake pedal (1a), the simulation device (3) is connected by means of the simulator valve (32) during the brake pressure build-up by means of the second pressure provision device (86).

6. Method according to any of Claims 1 to 5, **characterized in that** one of the predefined states of the brake installation is present if a pressure build-up is not possible by means of the first pressure provision device (5).

7. Method according to Claim 6, **characterized in that** one of the predefined states of the brake installation is present if, in addition, the electrical actuation of the at least one isolating valve (23a, 23b) of the first brake system (300) is possible.

8. Method according to Claim 6 or 7, **characterized in that** one of the predefined states of the brake installation is present if, in addition, the electrical actuation of an electrically actuatable simulator valve (32) provided for the activation or deactivation of a simulation device is possible.

9. Method according to any of Claims 6 to 8, **characterized in that** one of the predefined states of the brake installation is present if, in addition, a detection of an actuation of the brake pedal (1a) by means of a sensor (20, 25) of the first brake system (300) is possible.

10. Method according to any of Claims 1 to 9, **characterized in that** one of the predefined states of the brake installation is present if only an insufficient or unquantifiable pressure build-up is possible by means of the first pressure provision device (5).

11. Method according to any of Claims 1 to 10, **characterized in that** one of the predefined states of the brake installation is present if, in a first pressure medium reservoir (4) which is assigned to the first brake system (300) and which is in particular at atmospheric pressure, a pressure medium level is present which is lower than a predefined pressure medium threshold value.

12. Method according to any of Claims 1 to 11, **characterized in that** the second brake system (70) comprises at least one second pressure medium reservoir (120, 130), which is in particular at atmospheric pressure, and at least one dissipation valve (176, 186) which is closed when electrically deenergized, wherein the second pressure provision device (86) is connected at the pressure side via the at least one dissipation valve to the second pressure medium reservoir (120, 130), and **in that** a brake pressure dissipation in the second or the fourth wheel brake (9, 11) is realized by means of an opening of the at least one dissipation valve (176, 186).

13. Method according to Claim 12, **characterized in that** the second pressure provision device (86) is connected at the suction side via at least one intake valve (142, 152), which is closed when electrically deenergized, to the at least one second pressure medium reservoir (120, 130), and **in that**, for the brake pressure build-up in the second and the fourth wheel brake (9, 11) by means of the second pressure provision device (86), the at least one intake valve (142, 152) is opened.

14. Method according to any of Claims 1 to 13, **characterized in that** the first brake system (300) comprises, for each of the four wheel brakes (8-11), an electrically actuatable inlet valve (6a-6d) which is arranged between the first pressure provision device (5) and the wheel brake, and **in that**, in the predefined states of the brake installation, brake pressure control, in particular slip control, is implemented, wherein a limitation of a wheel brake pressure at the second or the fourth wheel brake (9, 11) is realized by means of a closure of the inlet valve, assigned to the corresponding wheel brake, of the first brake system (300).

15. Electrohydraulic brake installation (1) for a motor vehicle, in particular for highly automated driving, having
• at least one first, one second, one third and one fourth hydraulically actuatable wheel brake (8, 9, 10, 11),
• a first brake system (300) comprising a master brake cylinder (2) which is actuatable by means of a brake pedal and which is hydraulically connected by means of at least one electrically actuatable isolating valve (23a, 23b) to the four wheel brakes, comprising a first electronic open-loop and closed-loop control unit (12), and comprising a first electrically controllable pressure provision device (5) which is hydraulically connected to the four wheel brakes in particular via at least one electrically actuatable sequence valve (26a, 26b), and
• a second brake system (70) comprising a second electrically controllable pressure provision device (86) which is hydraulically connected to the first and the third wheel brake (8, 10), comprising a second electronic open-loop and closed-loop control unit (182), and comprising in each case one isolating valve (220, 240) for the first and the third wheel brake (8, 10), wherein the isolating valve is arranged in each case in a hydraulic connection (200, 204) between the first brake system (300) and the corresponding wheel brake,
**characterized in that**,
in predefined states of the brake installation, a brake pressure build-up in the second and the fourth wheel brake (9, 11) is performed by virtue of the second electronic open-loop and closed-loop control unit (182) activating the second pressure provision device (86), wherein the isolating valves (220, 240) are opened.

16. Brake installation (1) according to Claim 15, **characterized in that** the first and the third wheel brake (8, 10) are assigned to the wheels of a front axle of the motor vehicle and the second and the fourth wheel brake (9, 11) are assigned to the wheels of a rear axle of the motor vehicle.

17. Brake installation (1) according to Claim 15 or 16, **characterized in that**, for the brake pressure build-up in the second and the fourth wheel brake (9, 11) by means of the second pressure provision device (86), at least one of the valves (23a, 23b, 32) of the first brake system (300) is, by means of the first electronic open-loop and closed-loop control unit (12), electrically switched such that pressure medium is conveyed by the second pressure provision device (86) via the isolating valves (220, 240) and the first brake system (300) to the second and fourth wheel brake (9, 11).

18. Brake installation (1) according to any of Claims 15 to 17, **characterized in that** a method according to any of Claims 2 to 14 is implemented in said brake installation.

## Revendications

1. Procédé de fonctionnement d'un système de freinage électrohydraulique (1) destiné à un véhicule automobile et comprenant
• au moins un premier, un deuxième, un troisième et un quatrième frein de roue à commande hydraulique (8, 9, 10, 11),
• un premier système de freinage (300) comprenant un maître-cylindre de frein (2) qui peut être actionné au moyen d'une pédale de frein (la) et qui est relié hydrauliquement aux quatre freins de roue {8, 9, 10, 11) par le biais d'au moins une soupape d'isolement (23a, 23b) à commande électrique, et un premier dispositif d'alimentation en pression (5) à commande électrique qui est relié hydrauliquement aux quatre freins de roue (8, 9, 10, 11), en particulier par le biais d'au moins une soupape de connexion (26a, 26b) à commande électrique, et
• un deuxième système de freinage (70) comprenant un deuxième dispositif d'alimentation en pression (86) à commande électrique qui est relié hydrauliquement aux premier et troisième freins de roue (8, 10), et une soupape de séparation (220, 240) pour chacun des premier et troisième freins de roue (8, 10), la soupape de séparation étant disposée dans une liaison hydraulique (200, 204) située entre le premier système de freinage (300) et chaque frein de roue correspondant (8, 10),
**caractérisé en ce que**
dans des états prédéterminés du système de freinage (1), une augmentation de pression de freinage est effectuée dans les deuxième et quatrième freins de roue (9, 11) par commande du deuxième dispositif d'alimentation en pression (86) lorsque les soupapes de séparation (220, 240) sont ouvertes.

2. Procédé selon la revendication 1, **caractérisé en ce que,** pour augmenter la pression de freinage dans les deuxième et quatrième roues des freins (9, 11), un milieu sous pression est acheminé, par le biais des soupapes de séparation (220, 240) et du premier système de freinage (300), du deuxième dispositif d'alimentation en pression (86) aux deuxième et quatrième freins de roue.

3. Procédé selon la revendication 1 ou 2, **caractérisé en ce que,** pour augmenter la pression de freinage dans les deuxième et quatrième freins de roue (9, 11), l'au moins une soupape (23a, 23b, 32) du premier système de freinage (300) est actionnée au moyen du deuxième dispositif d'alimentation en pression (86).

4. Procédé selon l'une des revendications 1 à 3, **caractérisé en ce que** l'au moins une soupape d'isolement (23a, 23b) du premier système de freinage est fermée au moyen du deuxième dispositif d'alimentation en pression (86) pour augmenter la pression de freinage dans les deuxième et quatrième freins de roue (9, 11).

5. Procédé selon l'une quelconque des revendications 1 à 4, **caractérisé en ce que** le premier système de freinage comprend un dispositif de simulation (3) qui est relié hydrauliquement au maître-cylindre de frein, le dispositif de simulation étant associé à une soupape de simulation (32) à commande électrique au moyen de laquelle le dispositif de simulation peut être activé et désactivé, et **en ce que**, en cas d'actionnement de la pédale de frein (la), le dispositif de simulation (3) est activé au moyen de la soupape de simulation (32) pendant l'augmentation de pression de freinage au moyen du deuxième dispositif d'alimentation en pression (86).

6. Procédé selon l'une des revendications 1 à 5, **caractérisé en ce que** l'un des états prédéterminés du système de freinage est présent lorsqu'une augmentation de pression au moyen du premier dispositif d'alimentation en pression (5) n'est pas possible.

7. Procédé selon la revendication 6, **caractérisé en ce que** l'un des états prédéterminés du système de freinage est présent lorsque la commande électrique de l'au moins une soupape d'isolement (23a, 23b) du premier système de freinage (300) est également possible.

8. Procédé selon la revendication 6 ou 7, **caractérisé en ce que** l'un des états prédéterminés du système de freinage est présent lorsque la commande électrique d'une soupape de simulation (32) à commande électrique, prévue pour activer ou désactiver un dispositif de simulation, est également possible.

9. Procédé selon l'une des revendications 6 à 8, **caractérisé en ce que** l'un des états prédéterminés du système de freinage est présent lorsqu'un actionnement de la pédale de frein (la) peut également être détecté au moyen d'un capteur (20, 25) du premier système de freinage (300).

10. Procédé selon l'une des revendications 1 à 9, **caractérisé en ce que** l'un des états prédéterminés du système de freinage est présent lorsque seule une augmentation de pression insuffisante ou non quantifiable est possible au moyen du premier dispositif d'alimentation en pression (5).

11. Procédé selon l'une des revendications 1 à 10, **caractérisé en ce que** l'un des états prédéterminés du système de freinage est présent lorsqu'un niveau de milieu sous pression, inférieur à un seuil de milieu de pression prédéterminé, est présent dans un premier réservoir de milieu sous pression (4), notamment à la pression atmosphérique, qui est associé au premier système de freinage (300).

12. Procédé selon l'une des revendications 1 à 11, **caractérisé en ce que** le deuxième système de freinage (70) comprend au moins un deuxième réservoir de milieu sous pression (120, 130), notamment à la pression atmosphérique, et au moins une soupape de réduction (176, 186), normalement fermée, le deuxième dispositif d'alimentation en pression (86) étant relié côté pression, par le biais de l'au moins une soupape de réduction, au deuxième réservoir de milieu sous pression (120, 130), et **en ce qu'**une réduction de pression de freinage dans le deuxième ou quatrième frein de roue (9, 11) est effectuée par ouverture de l'au moins une soupape de réduction (176, 186).

13. Procédé selon la revendication 12, **caractérisé en ce que** le deuxième dispositif d'alimentation en pression (86) est relié côté aspiration, par le biais d'au moins une soupape d'aspiration (142, 152) normalement fermée, à l'au moins un deuxième réservoir de milieu sous pression (120, 130) et **en ce que**, pour augmenter la pression de freinage dans le deuxième et le quatrième frein de roue (9, 11), l'au moins une soupape d'aspiration (142, 152) est ouverte au moyen du deuxième dispositif d'alimentation en pression (86).

14. Procédé selon l'une des revendications 1 à 13, **caractérisé en ce que** le premier système de freinage (300) comprend pour chacun des quatre freins de roue (8-11) une soupape d'admission (6a-6d) à commande électrique qui est disposée entre le premier dispositif d'alimentation en pression (5) et le frein de roue et **en ce que**, dans les états prédéterminés du système de freinage, une régulation de pression de freinage, en particulier une régulation de patinage, est effectuée, une limitation d'une pression de frein de roue au niveau du deuxième ou du quatrième frein de roue (9, 11) étant effectuée par fermeture de la soupape d'entrée du premier système de freinage (300) qui est associée au frein de roue correspondant.

15. Système de freinage électrohydraulique (1) destiné à un véhicule automobile, en particulier pour une conduite hautement automatisée, et comprenant
• au moins un premier, un deuxième, un troisième et un quatrième frein de roue (8, 9, 10, 11) à commande hydraulique,
• un premier système de freinage (300) comprenant un maître-cylindre de frein (2) qui peut être actionné au moyen d'une pédale de frein et qui est relié hydrauliquement aux quatre freins de roue par le biais d'au moins une soupape d'isolement (23a, 23b) à commande électrique, une première unité de commande et de régulation électronique (12) et un premier dispositif d'alimentation en pression (5) à commande électrique qui est relié hydrauliquement aux quatre freins de roues, en particulier par le biais d'au moins une soupape de connexion (26a, 26b) à commande électrique, et
• un deuxième système de freinage (70) comprenant un deuxième dispositif d'alimentation en pression (86) à commande électrique qui est relié hydrauliquement aux premier et troisième freins de roue (8, 10), une deuxième unité de commande et de régulation électronique (182) et une soupape de séparation (220, 240) destinée à chacun des premier et troisième freins de roue (8, 10), la soupape de séparation étant disposée dans une liaison hydraulique (200, 204) située entre le premier système de freinage (300) et chaque frein de roue correspondant,
**caractérisé en ce que**
dans des états prédéterminés du système de freinage, une augmentation de pression de freinage est effectuée dans les deuxième et quatrième freins de roue (9, 11) par commande du deuxième dispositif d'alimentation en pression (86) par la deuxième unité de commande et de régulation électronique (182), les soupapes de séparation (220, 240) étant ouvertes.

16. Système de freinage (1) selon la revendication 15, **caractérisé en ce que** les premier et troisième freins de roue (8, 10) sont associés aux roues d'un essieu avant du véhicule automobile et les deuxième et quatrième freins de roue (9, 11) sont associés aux roues d'un essieu arrière du véhicule automobile.

17. Système de freinage (1) selon la revendication 15 ou 16, **caractérisé en ce que**, pour augmenter la pression de freinage dans les deuxième et quatrième freins de roue (9, 11) au moyen du deuxième dispositif d'alimentation en pression (86), au moins une des soupapes (23a, 23b, 32) du premier système de freinage (300) est commutée électriquement par la première unité de commande et de régulation électronique (12) de sorte que le milieu sous pression est acheminé du deuxième dispositif d'alimentation en pression (86) par le biais des soupapes de séparation (220, 240) et du premier système de freinage (300) vers les deuxième et quatrième freins de roue (9, 11).

18. Système de freinage (1) selon l'une des revendications 15 à 17, **caractérisé en ce qu'**un procédé selon l'une des revendications 2 à 14 est mis en œuvre dans celui-ci.
